(19) Europäisches Patentamt
European Patent Office
Office européen des brevets

(11) EP 3 645 679 B1

# (12) EUROPEAN PATENT SPECIFICATION

(45) Date of publication and mention of the grant of the patent:
**03.08.2022 Bulletin 2022/31**

(21) Application number: **18749525.4**

(22) Date of filing: **28.06.2018**

(51) International Patent Classification (IPC):
***C10M 129/54** (2006.01)*

(52) Cooperative Patent Classification (CPC):
(C-Sets available)
**C10M 129/54;** C10M 2207/262; C10M 2219/068; C10M 2223/045; C10N 2010/12; C10N 2020/071; C10N 2030/04; C10N 2030/06; C10N 2030/52; C10N 2030/54 (Cont.)

(86) International application number:
**PCT/IB2018/054803**

(87) International publication number:
**WO 2019/003176 (03.01.2019 Gazette 2019/01)**

## (54) LUBRICATING OIL MAGNESIUM DETERGENTS AND METHOD OF MAKING AND USING SAME

SCHMIERÖL-MAGNESIUMDETERGENZIEN UND VERFAHREN ZUR HERSTELLUNG UND VERWENDUNG DAVON

DÉTERGENTS À BASE DE MAGNÉSIUM POUR HUILE LUBRIFIANTE ET PROCÉDÉ DE FABRICATION ET D’UTILISATION DE CES DÉTERGENTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.06.2017 US 201762527152 P**

(43) Date of publication of application:
**06.05.2020 Bulletin 2020/19**

(73) Proprietors:
- **Chevron Oronite Company LLC**
  **San Ramon, CA 94583 (US)**
- **Chevron Oronite SAS**
  **92508 Rueil-Malmaison Cedex (FR)**

(72) Inventors:
- **BOFFA, Alexander Bowman**
  **San Ramon, California 94583 (US)**
- **WARD, Jacob Daniel**
  **San Ramon, California 94583 (US)**
- **LE DEORE, Christophe P.**
  **San Ramon, California 94583 (US)**
- **MILLER, Brendan P.**
  **San Ramon, California 94583 (US)**
- **CAMPBELL, Curtis Bay**
  **San Ramon, California 94583 (US)**

(74) Representative: **Haseltine Lake Kempner LLP**
**Redcliff Quay**
**120 Redcliff Street**
**Bristol BS1 6HU (GB)**

(56) References cited:
**US-A1- 2009 170 737 US-A1- 2011 003 726**

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
C10M 2207/262, C10N 2010/04;
C10M 2223/045, C10N 2010/04

## Description

This application claims the priority to U.S. Provisional Application Ser. No 62/527,152 filed June 30, 2017.

## BACKGROUND

Engine oil is blended with various additives in order to satisfy various performance requirements. Additives that are able to bring multiple performance benefits while at the same time minimizing their debits are of utmost importance when formulating lubricants. For example, developing a detergent additive that has the ability to improve base number (BN) retention, reduce deposit formation, control oxidation, as well as tuning the frictional characteristics may negate or limit the need for additional additives that provide only these single performance benefits. US 2011/003726 A1 describes a method for preparing an unsulfurized, carboxylate-containing additive for lubricating oils and the product produced by said method, wherein said method comprises a) neutralization of a mixture of at least two alkyl phenols using an alkaline earth base in the presence of a promoter, to produce a mixture of alkyl phenates, wherein the mixture of at least two alkyl phenols comprises at least a first alkyl phenol wherein the alkyl group is derived from an isomerized alpha olefin and a second alkyl phenol wherein the alkyl group is derived from a branched chain olefin; (b) carboxylation of the mixture of alkyl phenates obtained in step (a) using carbon dioxide under carboxylation conditions sufficient to convert at least 20 mole % of the starting alkyl phenols to alkyl salicylate; and (c) removal of at least about 10% of the starting mixture of at least two alkyl phenols from the product produced in step (b) to produce said additive.

A major challenge in engine oil formulation is developing lubricating oil compositions which simultaneously achieve benefits as those described above. Surprisingly, it has been found that lubricants formulated with magnesium alkylhydroxybenzoate detergents derived from isomerized normal alpha olefins show improvements in oxidation reduction, control deposits, BN retention, and friction performance.

## SUMMARY OF THE DISCLOSURE

The present invention is defined in and by the appended claims.

## DETAILED DESCRIPTION OF THE DISCLOSURE

While the invention is susceptible to various modifications and alternative forms, specific embodiments thereof are herein described in detail. It should be understood, however, that the description herein of specific embodiments is not intended to limit the invention to the particular forms disclosed, but on the contrary, the intention is to cover all modifications, equivalents, and alternatives falling within the scope of the invention as defined by the appended claims.

To facilitate the understanding of the subject matter disclosed herein, a number of terms, abbreviations or other shorthand as used herein are defined below. Any term, abbreviation or shorthand not defined is understood to have the ordinary meaning used by a skilled artisan contemporaneous with the submission of this application.

### Definitions:

In this specification, the following words and expressions, if and when used, have the meanings given below.

A "major amount" means in excess of 50 weight % of a composition.

A "minor amount" means less than 50 weight % of a composition, expressed in respect of the stated additive and in respect of the total mass of all the additives present in the composition, reckoned as active ingredient of the additive or additives.

"Active ingredients" or "actives" refers to additive material that is not diluent or solvent.

All percentages reported are weight % on an active ingredient basis (i.e., without regard to carrier or diluent oil) unless otherwise stated.

The abbreviation "ppm" means parts per million by weight, based on the total weight of the lubricating oil composition.

Total base number (TBN) was determined in accordance with ASTM D2896.

The term "overbased" is generally used to describe metal detergents in which the ratio of the number of equivalents of the metal moiety to the number of equivalents of the acid moiety is greater than one.

The term "non-carbonated", when used to describe a detergent, refers to a detergent which has not been further treated with an overbasing agent (does not undergo a carbonation step) after the neutralization step is performed in the manufacture of the detergent. Examples of suitable overbasing agents are carbon dioxide, a source of boron (i.e. boric acid), sulfur dioxide, hydrogen sulfide and ammonia. The most preferred overbasing agent is carbon dioxide, therefore, treatment of detergents with an overbasing agent can also be referred to as "carbonation".

High temperature high shear (HTHS) viscosity at 150°C was determined in accordance with ASTM D4863.

Kinematic viscosity at 100°C ($KV_{100}$) was determined in accordance with ASTM D445.

Cold Cranking Simulator (CCS) viscosity at -35°C was determined in accordance with ASTM D5293.

Noack volatility was determined in accordance with ASTM D5800.

Metal - The term "metal" refers to alkali metals, alkaline earth metals, or mixtures thereof.

Olefins - The term "olefins" refers to a class of unsaturated aliphatic hydrocarbons having one or more carbon-carbon double bonds, obtained by a number of processes. Those containing one double bond are called mono-alkenes, and those with two double bonds are called dienes, alkyldienes, or diolefins. Alpha olefins are particularly reactive because the double bond is between the first and second carbons. Examples are 1-octene and 1-octadecene, which are used as the starting point for medium-biodegradable surfactants. Linear and branched olefins are also included in the definition of olefins.

Normal Alpha Olefins - The term "Normal Alpha Olefins" "refers to olefins which are straight chain, non-branched hydrocarbons with carbon-carbon double bond present in the alpha or primary position of the hydrocarbon chain.

Isomerized Normal Alpha Olefin. The term "Isomerized Normal Alpha Olefin" as used herein refers to an alpha olefin that has been subjected to isomerization conditions which results in an alteration of the distribution of the olefin species present and/or the introduction of branching along the alkyl chain. The isomerized olefin product may be obtained by isomerizing a linear alpha olefin containing from about 10 to about 40 carbon atoms, preferably from about 20 to about 28 carbon atoms, and preferably from about 20 to about 24 carbon atoms.

$C_{10-40}$ Normal Alpha Olefins - This term defines a fraction of normal alpha olefins wherein the carbon numbers below 10 have been removed by distillation or other fractionation methods.

All ASTM standards referred to herein are the most current versions as of the filing date of the present application.

In one aspect, the present disclosure is directed to an alkyl substitued magnesium alkylhydroxybenzoate detergent wherein the alkyl group is derived from an isomerized alpha olefin having from 10 to 40 carbon atoms per molecule, and having an isomerization level (I) of the normal alpha olefin of from 0.1 to 0.4

In one embodiment, the magnesium alkylhydroxybenzoate detergent has the following structure (Formula 1):

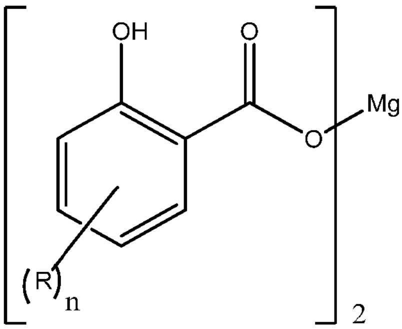 $(MgCO_3)_y\ (Mg(OH)_2)_z$

Formula 1

where R is an alkyl group derived from an isomerized alpha olefin having from 10 to 40 carbon atoms per molecule, having an isomerization level (I) of the normal alpha olefin of from 0.1 to 0.4, n is an integer from 1 to 4, and y and z are independently integers or fractional numerical values.

In one embodiment of the present disclosure, R is an alkyl group derived from an isomerized alpha olefin having from 14 to 28, from 20 to 28, from 14 to 18, or from 20 to 24 carbon atoms per molecule.

In one embodiment, the isomerized level (I) of the alpha olefin is between from 0.1 to 0.4, preferably from 0.1 to 0.3, more preferably from 0.12 to 0.3.

In one embodiment, the isomerization level of the alpha olefin is 0.16, and having from about 20 to 24 carbon atoms.

In one aspect, the present disclosure is directed to a lubricating oil composition comprising:

a) a major amount of an oil of lubricating viscosity; and
b) a magnesium alkylhydroxybenzoate detergent having the following structure (Formula 1):

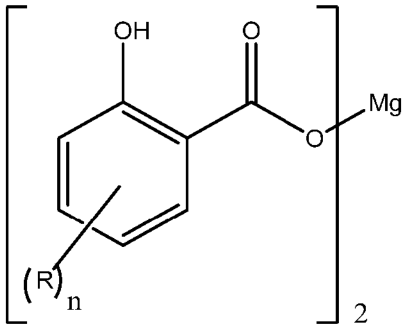 $(MgCO_3)_y\ (Mg(OH)_2)_z$

Formula 1,

where R is an alkyl group derived from an isomerized alpha olefin having from 10 to 40 carbon atoms per molecule, having an isomerization level (1) of the normal alpha olefin of from 0.1 to 0.4, n is an integer from 1 to 4, and y and z are independently integers or fractional numerical values.

In another aspect, the present invention is directed to a magnesium alkylhydroxybenzoate detergent prepared by the process comprising:

(a) alkylating a hydroxyaromatic compound with at least one normal alpha olefin having from 10 to 40 carbon atoms per molecule that has been isomerized to obtain an isomerized alpha olefin having an isomerization level (I) of the normal alpha olefin of from 0.1 to 0.4, thereby producing an alkylated hydroxyaromatic compound;

(b) neutralizing the resulting alkylated hydroxyaromatic compound with an alkali metal base such as KOH or NaOH to provide an alkali metal salt of the alkylated hydroxyaromatic compound;

(c) carboxylating the alkali metal salt from step (b) with $CO_2$ thereby producing an alkylated hydroxybenzoic acid alkali metal salt;

(d) acidifying the salt produced in step (c) with acid to produce the alkylated hydroxybenzoic acid;

(e) neutralizing the alkylated hydroxybenzoic acid with magnesium oxide, magnesium hydroxide, or magnesium carbonate; and

(f) optionally, overbasing the magnesium alkylhydroxybenzoate produced in step (e) with a magnesium compound such as MgO, $Mg(OH)_2$, $MgCO_3$ in the presence of $CO_2$ thereby producing an overbased magnesium alkyl hydroxybenzoate.

In one embodiment, the magnesium alkylhydroxybenzoate detergent can be a noncarbonated detergent.

In one embodiment, the magnesium alkylhydroxybenzoate detergent can be an overbased detergent.

In one embodiment, the magnesium alkylhydroxybenzoate detergent can be a salicylate detergent.

In one embodiment, the magnesium alkylhydroxybenzoate detergent can be a carboxylate detergent.

In one embodiment, the magnesium alkylhydroxybenzoate detergent has a TBN of 10-450, preferably 50-450, 100-450, 100-400, 150-350, 200-350, 250-350 mgKOH / gram on an actives basis

In one embodiment, the magnesium alkylhydroxybenzoate detergent has a magnesium content of 1-15, preferably 1-10, 1-8, 2-8, 4-8 wt % on an oil-free basis.

Aromatic Compound

At least one hydroxyaromatic compound or a mixture of hydroxyaromatic compounds may be used for the alkylation reaction in the present invention. Preferably the at least one hydroxyaromatic compound or the hydroxyaromatic compound mixture comprises at least one of monocyclic hydroxyaromatics, such as phenol, cresol, or mixtures thereof. The at least one hydroxyaromatic compound or hydroxyaromatic compound mixture may also comprise bicyclic and poly-cyclic hydroxyaromatic compounds, such as 2-naphthol. More preferably, the at least one hydroxyaromatic compound or hydroxyaromatic compound mixture is phenol.

Sources of Aromatic Compound

The at least one hydroxyaromatic compound or the mixture of hydroxyaromatic compounds employed in the present invention is prepared by methods that are well known in the art.

## Olefins

### Sources of Olefins

The olefins employed in this invention may be linear, isomerized linear, branched or partially branched linear. The olefin may be a mixture of linear olefins, a mixture of isomerized linear olefins, a mixture of branched olefins, a mixture of partially branched linear or a mixture of any of the foregoing.

### Normal Alpha Olefins

Preferably, the mixture of linear olefins that may be used for the alkylation reaction is a mixture of normal alpha olefins selected from olefins having from about 10 to about 40 carbon atoms per molecule. More preferably the normal alpha olefin mixture is selected from olefins having from about 14 to about 28 carbon atoms per molecule, such as from about 20 to about 28 or such as from about 14 to 18. Most preferably, the normal alpha olefin mixture is selected from olefins having from about 20 to about 24 carbon atoms per molecule.

In one embodiment of the present invention, the normal alpha olefins (NAO) are isomerized using at least one of a solid or liquid catalyst. The NAO isomerization process can be either a batch, semi-batch, continuous fixed bed or combination of these processes using homogenous or heterogenous catalysts. A solid catalyst preferably has at least one metal oxide and an average pore size of less than 5.5 angstroms. More preferably, the solid catalyst is a molecular sieve with a one-dimensional pore system, such as SM-3, MAPO-11, SAPO-11, SSZ-32, ZSM-23, MAPO-39, SAPO-39, ZSM-22 or SSZ-20. Other possible solid catalysts useful for isomerization include ZSM-35, SUZ-4, NU-23, NU-87 and natural or synthetic ferrierites. These molecular sieves are well known in the art and are discussed in Rosemarie Szostak's Handbook of Molecular Sieves (New York, Van Nostrand Reinhold, 1992). A liquid type of isomerization catalyst that can be used is iron pentacarbonyl ($Fe(CO)_5$).

The process for isomerization of normal alpha olefins may be carried out in batch or continuous mode. The process temperatures may range from about 50°C to about 250°C. In the batch mode, a typical method used is a stirred autoclave or glass flask, which may be heated to the desired reaction temperature. A continuous process is most efficiently carried out in a fixed bed process. Space rates in a fixed bed process can range from 0.1 to 10 or more weight hourly space velocity.

In a fixed bed process, the isomerization catalyst is charged to the reactor and activated or dried at a temperature of at about 150°C under vacuum or flowing inert, dry gas. After activation, the temperature of the isomerization catalyst is adjusted to the desired reaction temperature and a flow of the olefin is introduced into the reactor. The reactor effluent containing the partially-branched, isomerized olefins is collected. The resulting partially-branched, isomerized olefins contain a different olefin distribution (i.e., alpha olefin, beta olefin; internal olefin, tri-substituted olefin, and vinylidene olefin) and isomerization level than the unisomerized olefin and conditions are selected in order to obtain the desired olefin distribution and isomerization level.

### Acid Catalyst

Typically, the alkylated aromatic compound may be prepared in the presence of an alkylation catalyst. Useful alkylation catalysts include Lewis acid catalysts, solid acid catalysts, trifluoromethanesulfonic acid, and acidic molecular sieve catalysts. Suitable Lewis acid catalysts include aluminum trichloride, aluminum tribromide, aluminum triiodide, boron trifluoride, boron tribromide, boron triiodide and the like.

Suitable solid acidic catalysts include zeolites, acid clays, and/or silica-alumina. The catalyst may be a molecular sieve. Eligible molecular sieves are silica-aluminophosphate molecular sieves or metal silica-aluminophosphate molecular sieves, in which the metal may be, for example, iron, cobalt or nickel. In one embodiment, a solid catalyst is a cation exchange resin in its acid form, for example, crosslinked sulfonic acid catalyst. Suitable sulfonated acidic ion exchange resin type catalysts include Amberlyst 36®, available from Rohm and Hass (Philadelphia, Pa.). The acid catalyst may be recycled or regenerated when used in a batch process or a continuous process.

The reaction conditions for the alkylation depend upon the type of catalyst used, and any suitable set of reaction conditions that result in high conversion to the alkylhydroxyaromatic product can be employed. Typically, the reaction temperature for the alkylation reaction will be in the range of about 25° C. to about 200° C. and preferably from about 85° C. to about 135° C. The reaction pressure will generally be atmospheric, although higher or lower pressures may be employed. The alkylation process can be practiced in a batchwise, continuous or semi-continuous manner. The molar ratio of the hydroxyaromatic compound to one or more olefins is normally in the range of about 10:1 to about 0.5:1, and preferably will be in the range of about 5:1 to about 3:1.

The alkylation reaction may be carried out neat or in the presence of a solvent which is inert to the reaction of the hydroxyaromatic compound and the olefin mixture. When employed, a typical solvent is hexane.

Process for Preparing the Alkylated Aromatic Compound

In one embodiment of the present invention, the alkylation process is carried out by reacting a first amount of at least one hydroxyaromatic compound or a mixture of hydroxyaromatic compounds with a mixture of isomerized olefin compounds in the presence of an acid catalyst, such as Amberlyst 36®, in a reactor in which agitation is maintained, thereby producing a reaction product. The reaction product is further treated to remove excess un-reacted hydroxyaromatic compounds and, optionally, olefinic compounds from the desired alkylate product. The excess hydroxyaromatic compounds may also be recycled to the reactor(s).

The total charge mole ratio of hydrofluoric acid to the mixture of olefin compounds is about 1.0 to 1.

The total charge mole ratio of the aromatic compound to the mixture of olefin compounds is about 7.5 to 1.

Many types of reactor configurations may be used for the reactor zone. These include, but are not limited to, batch and continuous stirred tank reactors, reactor riser configurations, ebulating bed reactors, and other reactor configurations that are well known in the art. Many such reactors are known to those skilled in the art and are suitable for the alkylation reaction. Agitation is critical for the alkylation reaction and can be provided by rotating impellers, with or without baffles, static mixers, kinetic mixing in risers, or any other agitation devices that are well known in the art.

The alkylation process may be carried out at temperatures from about 0°C to about 150°C. The process is carried out under sufficient time to allow 95-99% conversion of the feedstock.

The residence time in the reactor is a time that is sufficient to convert a substantial portion of the olefin to alkylate product. The time required is from about 30 seconds to about 30 minutes. A more precise residence time may be determined by those skilled in the art using batch stirred tank reactors to measure the kinetics of the alkylation process.

The at least one hydroxyaromatic compound or mixture of hydroxyaromatic compounds and the mixture of olefins may be injected separately into the reaction zone or may be mixed prior to injection. Both single and multiple reaction zones may be used with the injection of the aromatic compounds and the mixture of isomerized olefins into one, several, or all reaction zones. The reaction zones need not be maintained at the same process conditions.

The hydrocarbon feed for the alkylation process may comprise a mixture of hydroxyaromatic compounds and a mixture isomerized olefins in which the molar ratio of hydroxyaromatic compounds to isomerized olefins is from about 0.5:1 to about 50:1 or more. In the case where the molar ratio of hydroxyaromatic compounds to isomerized olefin is > 1.0 to 1, there is an excess amount of hydroxyaromatic compounds present. Preferably an excess of hydroxyaromatic compounds is used to increase reaction rate and improve product selectivity. When excess hydroxyaromatic compounds are used, the excess un-reacted hydroxyaromatic in the reactor effluent can be separated, e.g. by distillation, and recycled to the reactor.

As disclosed herein, isomerized hydroxyaromatic compound may be obtained by reaction of the hydroxyaromatic compound with an isomerized normal alpha olefin, having from about 12 to about 40 carbon atoms per molecule. Typically, the alkylated hxdroxyaromatic compund comprises a mixture of monosubstituted isomers, the great majority of the substituents being in the para position, very few being in the ortho position, and hardly any in the meta position. That makes them relatively reactive towards an alkaline earth metal base, since the phenol function is practically devoid of steric hindrance.

NEUTRALIZATION STEP

The alkylated hydroxyaromatic compound, as described above, is neutralized using an alkali metal base, including but not limited to oxides or hydroxides of lithium, sodium or potassium. In a preferred embodiment, potassium hydroxide is preferred. In another preferred embodiment, sodium hydroxide is preferred. Neutralization of the alkylated hydroxyaromatic compound takes place, preferably, in the presence of a light solvent, such as toluene, xylene isomers, light alkylbenzene or the like, to form an alkali metal salt of the alkylated hydroxyaromatic compound. In one embodiment, the solvent forms an azeotrope with water. In another embodiment, the solvent may also be a mono-alcohol such as 2-ethylhexanol. In this case, the 2-ethylhexanol is eliminated by distillation before carboxylation. The objective with the solvent is to facilitate the elimination of water.

This step is carried out at a temperature high enough to eliminate water. In one embodiment, the product is put under a slight vacuum in order to require a lower reaction temperature.

In one embodiment, xylene is used as a solvent and the reaction conducted at a temperature between 130°C and 155°C, under an absolute pressure of 800 mbar ($8*10^4$ Pa).

In another embodiment, 2-ethylhexanol is used as solvent. As the boiling point of 2-ethylhexanol (184°C) is significantly higher than xylene (140°C), the reaction is conducted at a temperature of at least 150 °C.

The pressure is reduced gradually below atmospheric in order to complete the distillation of water reaction. Preferably, the pressure is reduced to no more than 70 mbar ($7*10^3$ Pa).

By providing that operations are carried out at a sufficiently (high temperature and that the pressure in the reactor is reduced gradually below atmospheric, the neutralization reaction is carried out without the need to add a

solvent and forms an azeotrope with the water formed during this reaction). In this case, temperature is heated up to 200 °C and then the pressure is reduced gradually below atmospheric. Preferably the pressure is reduced to no more than 70 mbar ($7*10^3$ Pa).

Elimination of water is done over a period of at least 1 hour, preferably at least 3 hours.

The quantities of reagents used should correspond to the following molar ratios: alkali metal base:alkylated hydroxyaromatic compound from about 0.5:1 to 1.2:1, preferably from about: 0.9:1 to 1.05:1 solvent:alkylated hydroxyaromatic compound (vol: vol) from about 0.1:1 to 5:1, preferably from about 0.3:1 to 3:1.

CARBOXYLATION

The carboxylation step is conducted by simply bubbling carbon dioxide ($CO_2$) into the reaction medium originating from the preceding neutralization step and is continued until at least 50% of the starting alkylated hydroxyaromatic compound has been converted to alkylhydroxybenzoate (measured by potentiometric determination).

At least 50 mole %, preferably 75 mole %, more preferably 85 mole % of the starting alkylated hydroxyaromatic compound is converted to alkylhydroxylbenzoate using $CO_2$ at a temperature between about 110°C and 200°C under a pressure within the range of from about atmospheric to 15 bar ($15*10^5$ Pa), preferably from 1 bar ($1*10^5$ Pa) to 5 bar ($5*10^5$ Pa), for a period between about 1 and 8 hours.

In one variant with potassium salt, temperature is preferably between about 125°C and 165°C and more preferably between 130°C and 155°C, and the pressure is from about atmospheric to 15 bar ($15*10^5$ Pa), preferably from about atmospheric to 4 bar ($4*10^5$ Pa).

In another variant with sodium salt, temperature is directionally lower preferably between from about 110°C and 155°C, more preferably from about 120°C and 140°C and the pressure from about 1 bar to 20 bar ($1*10^5$ to $20*10^5$ Pa), preferably from 3 bar to 15 bar ($3*10^5$ to $15*10^5$ Pa).

The carboxylation is usually carried out, diluted in a solvent such as hydrocarbons or alkylate, e.g., benzene, toluene, xylene and the like. In this case, the weight ratio of solvent:hydroxybenzoate (i.e., alkali metal salt of the alkylated hydroxyaromatic compound) is from about 0.1:1 to 5:1, preferably from about 0.3:1 to 3:1.

In another variant, no solvent is used. In this case, carboxylation is conducted in the presence of diluent oil in order to avoid a too viscous material.

The weight ratio of diluent oil:alkylhydroxybenzoate is from about 0.1:1 to 2:1, preferably from about 0.2:1 to 1:1 and more preferably from about 0.2:1 to 0.5:1.

ACIDIFICATION

The alkylated hydroxybenzoic acid alkali metal salt produced above is then contacted with at least one acid capable of converting the alkali metal salt to an alkylated hydroxybenzoic acid. Such acids are well known in the art to acidify the afore mentioned alkali metal salt.

NEUTRALIZATION

The alkylated hydroxybenzoic acid is neutralized with magnesium oxide, magnesium hydroxide, or magnesium carbonate; to form the noncarbonated magnesium alkylhydroxybenzoate detergent.

OVERBASING

Overbasing of the magnesium alkylhydroxybenzoate detergent may be carried out by any method known by a person skilled in the art to produce an overbased magnesium alkylhydroxybenzoate detergent.

In one embodiment of the invention, the overbasing reaction is carried out in a reactor by reacting the alkylated hydroxybenzoic acid with magnesium oxide, magnesium hydroxide, and magnesium carbonate in the presence of $CO_2$, in the presence of an aromatic solvent (i.e., xylene), and in the presence of a hydrocarbyl alcohol such as methanol.

The degree of overbasing may be controlled by the quantity of magnesium oxide, $CO_2$ and the reactants added to the reaction mixture and the reaction conditions used during the carbonation process.

The weight ratios of reagents used (methanol, xylene, MgO, $CO_2$, and water) will correspond to the following weight ratios: Xylene: MgO from about 1.5:1 to 7:1, preferably from about 2:1 to 4:1. Methanol: MgO from about 0.25:1 to 4:1, preferably from about 0.4:1 to 1.2:1. $CO_2$: MgO from a molar ratio about 0.5:1 to 1.3:1, preferably from about 0.7:1 to 1.0:1. Water: MgO from a molar ratio about 0.2:1 to 5:1, preferably 1:1 to 3:1. MgO is added as a slurry (i.e., as a pre-mixture of MgO, methanol, xylene) and $CO_2$ is introduced over a period of 1 hour to 4 hours, at a temperature between about 20°C. and 65°C.

The overbasing step can be done in the presence of a promoter. For example the promotor can be a lower

carboxylic acid.

The lower carboxylic compound or acid is represented by formula: XCOOY, where X is -H, $-CH_2OH$, $-CH_2Cl$, $-CH_2Br$, $-CH_2COCH_3$ or R, and Y is H, R or $M_n$ where R is an alkyl radical of from 1 to 4 carbon atoms, the sum of all the carbon atoms in the R radicals not exceeding 5, and $M_n$ is an alkali or alkaline earth metal atom wherein n is an integer of 1 or 2.

Preferred lower carboxylic compounds of this invention are essentially oil-insoluble compounds, such as acetic acid, propionic acid, butanoic acid, glycine, chloroacetic acid, bromoacetic acid, glycolic acid, ethyl acetoacetate, sodium acetate, calcium acetate and magnesium acetate. These compounds may be used individually or in combination with one another where the amount of this promoter ranges from 0.5 up to 5 equivalents per equivalent of oil-soluble hydroxybenzoic acid. Preferably, the amount ranges from 0.7 to 1.3 equivalents.

Succinic Anhydride (Co-Promoter)

Succinic anhydride promoters are disclosed in U.S. Pat. No. 4,647,387.

Useful succinic anhydrides include alkyl and alkenyl succinic anhydrides, as well as succinic anydride derivatives. Preferred embodiments are the alkenyl succinic anhydrides including dodecenyl succinic anhydride (DDSA), tetradecenyl succinic anhydride, n-octenyl succinic anhydride, nonenyl succinic anhydride, polyisobutenyl succinic anhydride (PIBSA), and the like. Suitable succinic anhydride derivatives include the acids, esters, half-esters, double-esters and other hydrolyzable derivatives. While succinic anhydrides having organic radicals of up to about $C_{70}$ may be useful, it is preferred that the organic radical of the succinic anhydride or its derivative be $C_6$-$C_{20}$, and most preferably $C_8$-$C_{18}$. The most preferred alkenyl succinic anhydrides are DDSA and PIBSA.

It has been found that the total amount of succinic anhydride or succinic anhydride derivative required as a promoter or copromoter in the carbonating mixture is 0.5 to 5.0% by weight, and preferably 1.5 to 3.0% by weight.

Optionally, for each of the processes described above, predistillation, centrifugation and distillation may be utilized to remove solvent and crude sediment. Water, methanol and a portion of the xylene may be eliminated by heating between 110°C to 134° C. This may be followed by centrifugation to eliminated unreacted MgO. Finally, xylene may be eliminated by heating under vacuum in order to reach a flash point of at least about 160° C as determined with the Pensky-Martens Closed Cup (PMCC) Tester described in ASTM D93.

## LUBRICATING OIL COMPOSITION

### Oil of Lubricating Viscosity

The oil of lubricating viscosity (sometimes referred to as "base stock" or "base oil") is the primary liquid constituent of a lubricant, into which additives and possibly other oils are blended, for example to produce a final lubricant (or lubricant composition). A base oil is useful for making concentrates as well as for making lubricating oil compositions therefrom, and may be selected from natural and synthetic lubricating oils and combinations thereof.

Natural oils include animal and vegetable oils, liquid petroleum oils and hydrorefined, solvent-treated mineral lubricating oils of the paraffinic, naphthenic and mixed paraffinicnaphthenic types. Oils of lubricating viscosity derived from coal or shale are also useful base oils.

Synthetic lubricating oils include hydrocarbon oils such as polymerized and interpolymerized olefins (e.g., polybutylenes, polypropylenes, propylene-isobutylene copolymers, chlorinated polybutylenes, poly(1-hexenes), poly(1-octenes), poly(1-decenes); alkylbenzenes (e.g., dodecylbenzenes, tetradecylbenzenes, dinonylbenzenes, di(2-ethylhexyl)benzenes; polyphenols (e.g., biphenyls, terphenyls, alkylated polyphenols); and alkylated diphenyl ethers and alkylated diphenyl sulfides and the derivatives, analogues and homologues thereof.

Another suitable class of synthetic lubricating oils comprises the esters of dicarboxylic acids (e.g., malonic acid, alkyl malonic acids, alkenyl malonic acids, succinic acid, alkyl succinic acids and alkenyl succinic acids, maleic acid, fumaric acid, azelaic acid, suberic acid, sebacic acid, adipic acid, linoleic acid dimer, phthalic acid) with a variety of alcohols (e.g., butyl alcohol, hexyl alcohol, dodecyl alcohol, 2-ethylhexyl alcohol, ethylene glycol, diethylene glycol monoether, propylene glycol). Specific examples of these esters include dibutyl adipate, di(2-ethylhexyl) sebacate, di-*n*-hexyl fumarate, dioctyl sebacate, diisooctyl azelate, diisodecyl azelate, dioctyl phthalate, didecyl phthalate, dieicosyl sebacate, the 2-ethylhexyl diester of linoleic acid dimer, and the complex ester formed by reacting one mole of sebacic acid with two moles of tetraethylene glycol and two moles of 2-ethylhexanoic acid.

Esters useful as synthetic oils also include those made from $C_5$ to $C_{12}$ monocarboxylic acids and polyols, and polyol ethers such as neopentyl glycol, trimethylolpropane, pentaerythritol, dipentaerythritol and tripentaerythritol.

The base oil may be derived from Fischer-Tropsch synthesized hydrocarbons. Fischer-Tropsch synthesized hydrocarbons are made from synthesis gas containing $H_2$ and CO using a Fischer-Tropsch catalyst. Such hydrocarbons typically require further processing in order to be useful as the base oil. For example, the hydrocarbons may be hydroisomerized; hydrocracked and hydroisomerized; dewaxed; or hydroisomerized and dewaxed; using processes known to those skilled in the art.

Unrefined, refined and re-refined oils can be used in the present lubricating oil composition. Unrefined oils are those obtained directly from a natural or synthetic source without further purification treatment. For example, a shale oil obtained directly from retorting operations, a petroleum oil obtained directly from distillation or ester oil obtained directly from an esterification process and used without further treatment would be unrefined oil. Refined oils are similar to the unrefined oils except they have been further treated in one or more purification steps to improve one or more properties. Many such purification techniques, such as distillation, solvent extraction, acid or base extraction, filtration and percolation are known to those skilled in the art. Re-refined oils are obtained by processes similar to those used to obtain refined oils applied to refined oils which have been already used in service. Such re-refined oils are also known as reclaimed or reprocessed oils and often are additionally processed by techniques for approval of spent additive and oil breakdown products.

Hence, the base oil which may be used to make the present lubricating oil composition may be selected from any of the base oils in Groups I-V as specified in the American Petroleum Institute (API) Base Oil Interchangeability Guidelines (API Publication 1509). Such base oil groups are summarized in Table 1 below:

Table 1

| | Base Oil Properties | | |
|---|---|---|---|
| Group[(a)] | Saturates[(b)], wt. % | Sulfur[(c)], wt. % | Viscosity Index[(d)] |
| Group I | <90 and/or | >0.03 | 80 to <120 |
| Group II | ≥90 | ≤0.03 | 80 to <120 |
| Group III | ≥90 | ≤0.03 | ≥120 |
| Group IV | Polyalphaolefins (PAOs) | | |
| Group V | All other base stocks not included in Groups I, II, III or IV | | |

[(a)] Groups I-III are mineral oil base stocks.
[(b)] Determined in accordance with ASTM D2007.
[(c)] Determined in accordance with ASTM D2622, ASTM D3120, ASTM D4294 or ASTM D4927.
[(d)] Determined in accordance with ASTM D2270.

Base oils suitable for use herein are any of the variety corresponding to API Group II, Group III, Group IV, and Group V oils and combinations thereof, preferably the Group III to Group V oils due to their exceptional volatility, stability, viscometric and cleanliness features.

The oil of lubricating viscosity for use in the lubricating oil compositions of this disclosure, also referred to as a base oil, is typically present in a major amount, e.g., an amount of greater than 50 wt. %, preferably greater than about 70 wt. %, more preferably from about 80 to about 99.5 wt. % and most preferably from about 85 to about 98 wt. %, based on the total weight of the composition. The expression "base oil" as used herein shall be understood to mean a base stock or blend of base stocks which is a lubricant component that is produced by a single manufacturer to the same specifications (independent of feed source or manufacturer's location); that meets the same manufacturer's specification; and that is identified by a unique formula, product identification number, or both. The base oil for use herein can be any presently known or later-discovered oil of lubricating viscosity used in formulating lubricating oil compositions for any and all such applications, e.g., engine oils, marine cylinder oils, functional fluids such as hydraulic oils, gear oils, transmission fluids, etc. Additionally, the base oils for use herein can optionally contain viscosity index improvers, e.g., polymeric alkylmethacrylates; olefinic copolymers, e.g., an ethylene-propylene copolymer or a styrenebutadiene copolymer; and the like and mixtures thereof.

As one skilled in the art would readily appreciate, the viscosity of the base oil is dependent upon the application. Accordingly, the viscosity of a base oil for use herein will ordinarily range from about 2 to about 2000 centistokes (cSt) at 100° Centigrade (C.). Generally, individually the base oils used as engine oils will have a kinematic viscosity range at 100° C. of about 2 cSt to about 30 cSt, preferably about 3 cSt to about 16 cSt, and most preferably about 4 cSt to about 12 cSt and will be selected or blended depending on the desired end use and the additives in the finished oil to give the desired grade of engine oil, e.g., a lubricating oil composition having an SAE Viscosity Grade of 0W, 0W-8, 0W-12, 0W-16, 0W-20, 0W-26, 0W-30, 0W-40, 0W-50, 0W-60, 5W, 5W-20, 5W-30, 5W-40, 5W-50, 5W-60, 10W, 10W-20, 10W-30, 10W-40, 10W-50, 15W, 15W-20, 15W-30, 15W-40, 30, 40, 50, 60 and the like.

In one embodiment, the lubricating oil composition containing the magnesium alkylhydroxybenzoate detergent described herein further comprises a molybdenum containing compound.

Organomolybdenum Compound

The organomolybdenum compound contains at least molybdenum, carbon and hydrogen atoms, but may also contain sulfur, phosphorus, nitrogen and/or oxygen atoms. Suitable organomolybdenum compounds include molybdenum dithiocarbamates, molybdenum dithiophosphates, and various organic molybdenum complexes such as molybdenum carboxylates, molybdenum esters, molybdenum amines, molybdenum amides, which can be obtained by reacting molybdenum oxide or ammonium molybdates with fats, glycerides or fatty acids, or fatty acid derivatives (e.g., esters, amines, amides). The term "fatty" means a carbon chain having 10 to 22 carbon atoms, typically a straight carbon chain.

Molybdenum dithiocarbamate (MoDTC) is an organomolybdenum compound represented by the following structure (Formula 1):

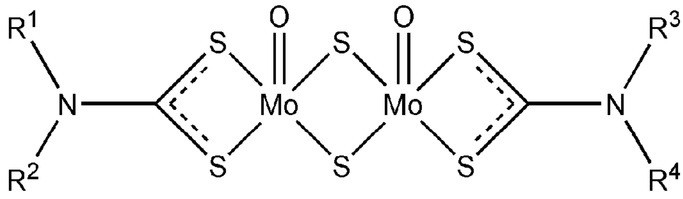

Formula 2,

wherein $R^1$, $R^2$, $R^3$ and $R^4$ are independently of each other, linear or branched alkyl groups having from 4 to 18 carbon atoms (e.g., 8 to 13 carbon atoms).

Molybdenum dithiophosphate (MoDTP) is an organomolybdenum compound represented by the following structure (Formula 2):

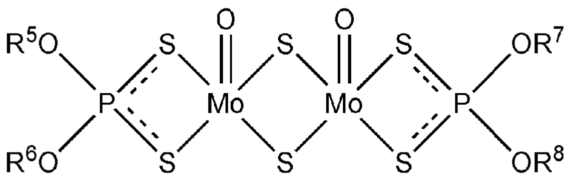

Formula 3,

wherein $R^5$, $R^6$, $R^7$ and $R^8$ are independently of each other, linear or branched alkyl groups having from 4 to 18 carbon atoms (e.g., 8 to 13 carbon atoms).

In one embodiment, the molybdenum amine is a molybdenum-succinimide complex. Suitable molybdenum-succinimide complexes are described, for example, in U.S. Patent No. 8,076,275. These complexes are prepared by a process comprising reacting an acidic molybdenum compound with an alkyl or alkenyl succinimide of a polyamine of structure (Formula 3) or (Formula 4) or mixtures thereof:

Formula 4

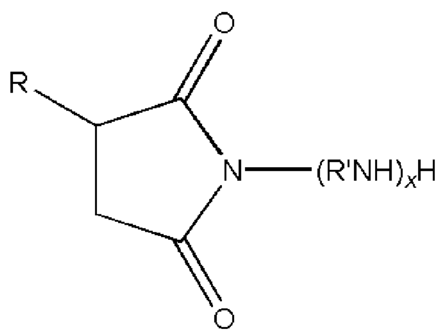

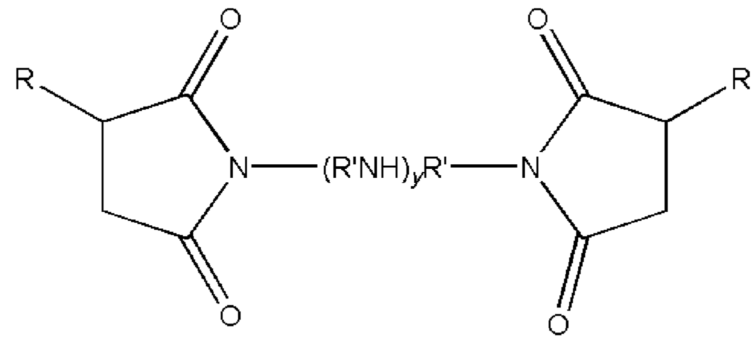

Formula 5,

wherein R is a $C_{24}$ to $C_{350}$ (e.g., $C_{70}$ to $C_{128}$) alkyl or alkenyl group; R' is a straight or branchedchain alkylene group having 2 to 3 carbon atoms; x is 1 to 11; and *y* is 1 to 10.

The molybdenum compounds used to prepare the molybdenum-succinimide complex are acidic molybdenum compounds or salts of acidic molybdenum compounds. By "acidic" is meant that the molybdenum compounds will react with a basic nitrogen compound as measured by ASTM D664 or D2896. Generally, the acidic molybdenum compounds are hexavalent. Representative examples of suitable molybdenum compounds include molybdenum trioxide, molybdic acid, ammonium molybdate, sodium molybdate, potassium molybdate and other alkaline metal molybdates and other molybdenum salts such as hydrogen salts, (e.g., hydrogen sodium molybdate), $MoOCl_4$, $MoO_2Br_2$, $Mo_2O_3Cl_6$, and the like.

The succinimides that can be used to prepare the molybdenum-succinimide complex are disclosed in numerous references and are well known in the art. Certain fundamental types of succinimides and the related materials encompassed by the term of art "succinimide" are taught in U.S. Patent Nos. 3,172,892; 3,219,666; and 3,272,746. The term "succinimide" is understood in the art to include many of the amide, imide, and amidine species which may also be formed. The predominant product however is a succinimide and this term has been generally accepted as meaning the product of a reaction of an alkyl or alkenyl substituted succinic acid or anhydride with a nitrogen-containing compound. Preferred succinimides are those prepared by reacting a polyisobutenyl succinic anhydride of about 70 to 128 carbon atoms with a polyalkylene polyamine selected from triethylenetetramine, tetraethylenepentamine, and mixtures thereof.

The molybdenum-succinimide complex may be post-treated with a sulfur source at a suitable pressure and a temperature not to exceed 120°C to provide a sulfurized molybdenum-succinimide complex. The sulfurization step may be carried out for a period of from about 0.5 to 5 hours (e.g., 0.5 to 2 hours). Suitable sources of sulfur include elemental sulfur, hydrogen sulfide, phosphorus pentasulfide, organic polysulfides of formula $R_2S_x$ where R is hydrocarbyl (e.g., $C_1$ to $C_{10}$ alkyl) and x is at least 3, $C_1$ to $C_{10}$ mercaptans, inorganic sulfides and polysulfides, thioacetamide, and thiourea.

In one embodiment, the lubricating oil composition containing the magnesium alkylhydroxybenzoate detergent described herein further comprises a zinc dihydrocarbyl dithiophosphates (ZDDP) compound.

*Antiwear Agents*

Antiwear agents reduce wear of metal parts. Suitable anti-wear agents include dihydrocarbyl dithiophosphate metal salts such as zinc dihydrocarbyl dithiophosphates (ZDDP) of formula (Formula 6):

$$Zn[S\text{-}P(=S)(OR^1)(OR^2)]_2 \qquad \text{Formula 6,}$$

wherein $R^1$ and $R^2$ may be the same of different hydrocarbyl radicals having from 1 to 18 (e.g., 2 to 12) carbon atoms and including radicals such as alkyl, alkenyl, aryl, arylalkyl, alkaryl and cycloaliphatic radicals. Particularly preferred as $R^1$ and $R^2$ groups are alkyl groups having from 2 to 8 carbon atoms (e.g., the alkyl radicals may be ethyl, *n*-propyl, isopropyl, *n*-butyl, isobutyl, *sec*-butyl, *n*-pentyl, isopentyl, *n*-hexyl, isohexyl, 2-ethylhexyl). In order to obtain oil solubility, the total number of carbon atoms (i.e., $R^1$+$R^2$) will be at least 5. The zinc dihydrocarbyl dithiophosphate can therefore comprise zinc dialkyl dithiophosphates. The zinc dialkyl dithiophosphate is a primary, secondary zinc dialkyl dithiophosphate, or a combination thereof.

ZDDP may be present at 3 wt. % or less (e.g., 0.1 to 1.5 wt. %, or 0.5 to 1.0 wt %) of the lubricating oil composition.

In one embodiment, the lubricating oil composition containing the magnesium alkylhydroxybenzoate detergent described herein further comprises an antioxidant compound. In one embodiment, the antioxidant is a diphenylamine antioxidant. In another embodiment, the antioxidant is a hindered phenol antioxidant. In yet another embodiment, the antioxidant is a combination of a diphenylamine antioxidant and a hindered phenol antioxidant.

*Antioxidants*

Antioxidants reduce the tendency of mineral oils during to deteriorate during service. Oxidative deterioration can be evidenced by sludge in the lubricant, varnish-like deposits on the metal surfaces, and by viscosity growth. Suitable antioxidants include hindered phenols, aromatic amines, and sulfurized alkylphenols and alkali and alkaline earth metals salts thereof.

The hindered phenol antioxidant often contains a secondary butyl and/or a tertiary butyl group as a sterically hindering group. The phenol group may be further substituted with a hydrocarbyl group (typically linear or branched alkyl) and/or a bridging group linking to a second aromatic group. Examples of suitable hindered phenol antioxidants include *2,6-di-tert*butylphenol; 4-methyl-2,6-di-tert-butylphenol; 4-ethyl-2,6-di-tert-butylphenol; 4-propyl-2,6-di-tert-butylphenol; 4-butyl-2,6-di-tert-butylphenol; and 4-dodecyl-2,6-di-*tert*-butylphenol. Other useful hindered phenol antioxidants include 2,6-di-alkyl-phenolic propionic ester derivatives such as IRGANOX® L-135 from Ciba and bis-phenolic antioxidants such as 4,4'-bis(2,6-di-tert-butylphenol) and 4,4'-methylenebis(2,6-di-tert-butylphenol).

Typical aromatic amine antioxidants have at least two aromatic groups attached directly to one amine nitrogen. Typical aromatic amine antioxidants have alkyl substituent groups of at least 6 carbon atoms. Particular examples of aromatic amine antioxidants useful herein include 4,4' -dioctyldiphenylamine, 4,4' -dinonyldiphenylamine, *N*-phenyl-1-naphthylamine, *N*-(4-*tert*-octyphenyl)-1-naphthylamine, and *N*-(4-octylphenyl)-1-naphthylamine.

Antioxidants may be present at 0.01 to 5 wt. % (e.g., 0.1 to 2 wt. %) of the lubricating oil composition.

In one embodiment, the lubricating oil composition containing the magnesium alkylhydroxybenzoate detergent described herein further comprises a dispersant. Suitable dispersants are described herein.

*Dispersants*

Dispersants maintain in suspension materials resulting from oxidation during engine operation that are insoluble in oil, thus preventing sludge flocculation and precipitation or deposition on metal parts. Dispersants useful herein include nitrogen-containing, ashless (metal-free) dispersants known to effective to reduce formation of deposits upon use in gasoline and diesel engines.

Suitable dispersants include hydrocarbyl succinimides, hydrocarbyl succinamides, mixed ester/amides of hydrocarbyl-substituted succinic acid, hydroxyesters of hydrocarbyl-substituted succinic acid, and Mannich condensation products of hydrocarbyl-substituted phenols, formaldehyde and polyamines. Also suitable are condensation products of polyamines and hydrocarbyl-substituted phenyl acids. Mixtures of these dispersants can also be used.

Basic nitrogen-containing ashless dispersants are well-known lubricating oil additives and methods for their preparation are extensively described in the patent literature. Preferred dispersants are the alkenyl succinimides and succinamides where the alkenyl-substituent is a long-chain of preferably greater than 40 carbon atoms. These materials are readily made by reacting a hydrocarbyl-substituted dicarboxylic acid material with a molecule containing amine functionality. Examples of suitable amines are polyamines such as polyalkylene polyamines, hydroxy-substituted polyamines and polyoxyalkylene polyamines.

Particularly preferred ashless dispersants are the polyisobutenyl succinimides formed from polyisobutenyl succinic anhydride and a polyalkylene polyamine such as a polyethylene polyamine of formula:

$$NH_2(CH_2CH_2NH)_zH \qquad \text{Formula 7}$$

wherein z is 1 to 11. The polyisobutenyl group is derived from polyisobutene and preferably has a number average molecular weight ($M_n$) in a range of 700 to 3000 Daltons (e.g., 900 to 2500 Daltons). For example, the polyisobutenyl succinimide may be a bis-succinimide derived from a polyisobutenyl group having a $M_n$ of 900 to 2500 Daltons.

As is known in the art, the dispersants may be post-treated (e.g., with a boronating agent or a cyclic carbonate).

Nitrogen-containing ashless (metal-free) dispersants are basic, and contribute to the TBN of a lubricating oil composition to which they are added, without introducing additional sulfated ash.

Dispersants may be present at 0.1 to 10 wt. % (e.g., 2 to 5 wt. %) of the lubricating oil composition.

In one embodiment, the lubricating oil composition containing the magnesium alkylhydroxybenzoate detergent described herein further comprises an additional detergent. Suitable detergents are described herein.

**Additional Detergents**

The lubricating oil composition of the present invention can further contain one or more overbased detergents having a TBN of 10-800, 10-700, 30-690, 100-600, 150-600, 150-500, 200-450 mg KOH/g on an actives basis.

Detergents that may be used include oil-soluble overbased sulfonate, non-sulfur containing phenate, sulfurized phenates, salixarate, salicylate, carboxylate, saligenin, complex detergents and naphthenate detergents and other oil-soluble alkylhydroxybenzoates of a metal, particularly the alkali or alkaline earth metals, e.g., barium, sodium, potassium, lithium, calcium, and magnesium. The most commonly used metals are calcium and magnesium, which may both be present in detergents used in a lubricant, and mixtures of calcium and/or magnesium with sodium.

Overbased metal detergents are generally produced by carbonating a mixture of hydrocarbons, detergent acid, for example: sulfonic acid, alkylhydroxybenzoate etc., metal oxide or hydroxides (for example calcium oxide or calcium hydroxide) and promoters such as xylene, methanol and water. For example, for preparing an overbased calcium sulfonate, in carbonation, the calcium oxide or hydroxide reacts with the gaseous carbon dioxide to form calcium carbonate. The sulfonic acid is neutralized with an excess of CaO or $Ca(OH)_2$, to form the sulfonate.

Overbased detergents may be low overbased, e.g., an overbased salt having a TBN below 100 on an actives basis. In one embodiment, the TBN of a low overbased salt may be from about 30 to about 100. In another embodiment, the TBN of a low overbased salt may be from about 30 to about 80. Overbased detergents may be medium overbased, e.g., an overbased salt having a TBN from about 100 to about 300. In one embodiment, the TBN of a medium overbased salt may be from about 100 to about 250. In another embodiment, the TBN of a medium overbased salt may be from about 125 to about 225. Overbased detergents may be high overbased, e.g., an overbased salt having a TBN above 300. In one embodiment, the TBN of a high overbased salt may be from about 300 to about 800 on an actives basis.

In one embodiment, the detergent can be one or more alkali or alkaline earth metal salts of an alkyl-substituted hydroxyaromatic carboxylic acid. Suitable hydroxyaromatic compounds include mononuclear monohydroxy and polyhydroxy aromatic hydrocarbons having 1 to 4, and preferably 1 to 3, hydroxyl groups. Suitable hydroxyaromatic compounds include phenol, catechol, resorcinol, hydroquinone, pyrogallol, cresol, and the like. The preferred hydroxyaromatic compound is phenol.

The alkyl substituted moiety of the alkali or alkaline earth metal salt of an alkyl-substituted hydroxyaromatic carboxylic acid is derived from an alpha olefin having from about 10 to about 80 carbon atoms. The olefins employed may be linear, isomerized linear, branched or partially branched linear. The olefin may be a mixture of linear olefins, a mixture of isomerized linear olefins, a mixture of branched olefins, a mixture of partially branched linear or a mixture of any of the foregoing.

In one embodiment, the mixture of linear olefins that may be used is a mixture of normal alpha olefins selected from olefins having from about 10 to about 40 carbon atoms per molecule. In one embodiment, the normal alpha olefins are isomerized using at least one of a solid or liquid catalyst.

In one embodiment, at least about 50 mole%, at least about 75 mole%, at least about 80 mole%, at least about 85 mole%, at least about 90 mole%, at least about 95 mole% of the alkyl groups contained within the alkali or alkaline earth metal salt of an alkyl-substituted hydroxyaromatic carboxylic acid such as the alkyl groups of an alkaline earth metal salt of an alkyl-substituted hydroxybenzoic acid detergent are a $C_{20}$ or higher. In another embodiment, the alkali or alkaline earth metal salt of an alkyl-substituted hydroxyaromatic carboxylic acid is an alkali or alkaline earth metal salt of an alkyl-substituted hydroxybenzoic acid that is derived from an alkyl-substituted hydroxybenzoic acid in which the alkyl groups are $C_{20}$ to about $C_{28}$ normal alpha-olefins. In another embodiment, the alkyl group is derived from at least two alkylated phenols. The alkyl group on at least one of the at least two alkyl phenols is derived from an isomerized alpha olefin. The alkyl group on the second alkyl phenol may be derived from branched or partially branched olefins, highly isomerized olefins or mixtures thereof.

In another embodiment, the alkali or alkaline earth metal salt of an alkyl-substituted hydroxyaromatic carboxylic acid is a salicylate derived from an alkyl group with 20-40 carbon atoms, preferably 20-28 carbon atoms, more preferably, isomerized 20-24 NAO.

In one embodiment, the lubricating oil composition containing the magnesium alkylhydroxybenzoate detergent derived from isomerized NAO described herein further comprises a magnesium alkyhroxybenzoate detergent that is derived from an olefin that is not isomerized. For example, this magnesium alkyhydroxybenzoate detergent can be a $C_{14}$-$C_{18}$ magnesium alkylhydroxybenzoate detergent. One such magnesium alkyhydroxybenzoate detergent is available from Infineum International Ltd under the trade designation "Infineum C9012".

Sulfonates may be prepared from sulfonic acids which are typically obtained by the sulfonation of alkyl substituted aromatic hydrocarbons such as those obtained from the fractionation of petroleum or by the alkylation of aromatic hydrocarbons. Examples included those obtained by alkylating benzene, toluene, xylene, naphthalene, diphenyl or their halogen derivatives. The alkylation may be carried out in the presence of a catalyst with alkylating agents having from about 3 to more than 70 carbon atoms. The alkaryl sulfonates usually contain from about 9 to about 80 or more carbon atoms, preferably from about 16 to about 60 carbon atoms, preferably about 16 to 30 carbon atoms, and more preferably 20-24 carbon atoms per alkyl substituted aromatic moiety.

Metal salts of phenols and sulfurized phenols, which are sulfurized phenate detergents, are prepared by reaction with an appropriate metal compound such as an oxide or hydroxide and neutral or overbased products may be obtained by methods well known in the art. Sulfurized phenols may be prepared by reacting a phenol with sulfur or a sulfur containing compound such as hydrogen sulfide, sulfur monohalide or sulfur dihalide, to form products which are generally mixtures of compounds in which 2 or more phenols are bridged by sulfur containing bridges.

Additional details regarding the general preparation of sulfurized phenates can be found in, for example, U.S. Pat. Nos. 2,680,096; 3,178,368, 3,801,507, and 8,580,717 .

Considering now in detail, the reactants and reagents used in the present process, first all allotropic forms of sulfur can be used. The sulfur can be employed either as molten sulfur or as a solid (e.g., powder or particulate) or as a solid suspension in a compatible hydrocarbon liquid.

It is desirable to use calcium hydroxide as the calcium base because of its handling convenience versus, for example, calcium oxide, and also because it affords excellent results. Other calcium bases can also be used, for example, calcium alkoxides.

Suitable alkylphenols which can be used are those wherein the alkyl substituents contain a sufficient number of carbon atoms to render the resulting overbased sulfurized calcium alkylphenate composition oil-soluble. Oil solubility may be provided by a single long chain alkyl substitute or by a combination of alkyl substituents. Typically, the alkylphenol used will be a mixture of different alkylphenols, e.g., $C_{20}$ to $C_{24}$ alkylphenol.

In one embodiment, suitable alkyl phenolic compounds will be derived from isomerized alpha olefin alkyl groups having from about 10 to about 40 carbon atoms per molecule, having an isomerized level (1) of the alpha olefin between from about 0.1 to about 0.4. In one embodiment, suitable alkyl phenolic compounds will be derived from alkyl groups which are branched olefinic propylene oligomers or mixture thereof having from about 9 to about 80 carbon atoms. In one embodiment, the branched olefinic propylene oligomer or mixtures thereof have from about 9 to about 40 carbon atoms. In one embodiment, the branched olefinic propylene oligomer or mixtures thereof have from about 9 to about 18 carbon atoms. In one embodiment, the branched olefinic propylene oligomer or mixtures thereof have from about 9 to about 12 carbon atoms.

In one embodiment, suitable alkyl phenolic compounds comprise distilled cashew nut shell liquid (CNSL) or hydrogenated distilled cashew nut shell liquid. Distilled CNSL is a mixture of biodegradable meta-hydrocarbyl substituted phenols, where the hydrocarbyl group is linear and unsaturated, including cardanol. Catalytic hydrogenation of distilled CNSL gives rise to a mixture of meta-hydrocarbyl substituted phenols predominantly rich in 3-pentadecylphenol.

The alkylphenols can be para-alkylphenols, meta-alkylphenols or ortho alkylphenols. Since it is believed that p-alkylphenols facilitate the preparation of highly overbased calcium sulfurized alkylphenate where overbased products are desired, the alkylphenol is preferably predominantly a para alkylphenol with no more than about 45 mole percent of the alkylphenol being ortho alkylphenols; and more preferably no more than about 35 mole percent of the alkylphenol is ortho alkylphenol. Alkyl-hydroxy toluenes or xylenes, and other alkyl phenols having one or more alkyl substituents in addition to at least one long chained alkyl substituent can also be used. In the case of distilled cashew nut shell liquid, the catalytic hydrogenation of distilled CNSL gives rise to a mixture of meta-hydrocarbyl substituted phenols.

In one embodiment, the one or more overbased detergent can be a complex or hybrid detergent which is known in the art as comprising a surfactant system derived from at least two surfactants described above.

Generally, the amount of the detergent can be from about 0.001 wt. % to about 50 wt. %, or from about 0.05 wt. % to about 25 wt. %, or from about 0.1 wt. % to about 20 wt. %, or from about 0.01 to 15 wt. % based on the total weight of the lubricating oil composition.

## Additional Co-Additives

The present lubricating oil composition may additionally contain one or more of the other commonly used lubricating oil performance co-additives including friction modifiers, corrosion inhibitors, foam inhibitors, viscosity index improvers, pour point depressants, rust inhibitors, dehazing agents, demulsifying agents, metal deactivating agents, antifoaming agents, co-solvents, multifunctional agents, dyes, extreme pressure agents and the like and mixtures thereof. A variety of the additives are known and commercially available. These additives, or their analogous compounds, can be employed for the preparation of the lubricating oil compositions of the disclosure by the usual blending procedures.

The following examples are presented to exemplify embodiments of the invention but are not intended to limit the invention to the specific embodiments set forth. Unless indicated to the contrary, all parts and percentages are by weight. All numerical values are approximate. When numerical ranges are given, it should be understood that embodiments outside the stated ranges may still fall within the scope of the invention. Specific details described in each example should not be construed as necessary features of the invention.

## EXAMPLES

The following illustrative examples are intended to be non-limiting.

The isomerization level was measured by an NMR method.

*Isomerization level (I) and NMR method*

The isomerization level (I) of the olefin was determined by hydrogen-1 (1H) NMR. The NMR spectra were obtained on a Bruker Ultrashield Plus 400 in chloroform-d1 at 400 MHz using TopSpin 3.2 spectral processing software.
The isomerization level (1) represents the relative amount of methyl groups ($-CH_3$) (chemical shift 0.30-1.01 ppm) attached to the methylene backbone groups ($-CH_2-$) (chemical shift 1.01-1.38 ppm) and is defined by Equation (1) as shown below,

$$I = m/(m+n) \qquad \text{Equation (1)},$$

where m is NMR integral for methyl groups with chemical shifts between 0.30 $\pm$ 0.03 to 1.01 $\pm$ 0.03 ppm, and n is NMR integral for methylene groups with chemical shifts between 1.01 $\pm$ 0.03 to 1.38 $\pm$ 0.10 ppm.
For Example A and Comparative Examples, A-D, the TBN and metals are given on an additive basis, not oil free basis.

Example A

A slurry of MgO (82 grams) in MeOH (81.4 grams) and xylene (500 grams) is prepared and introduced into a reactor. Then the hydroxybenzoic acid made from isomerized alpha olefin (C20-24, 0.16 isomerization level), (1774 grams, 43% active in xylene) is loaded into the reactor and the temperature kept at 40°C for 15 minutes. Then dodecenylanhydride (DDSA, 7.6 grams) followed by AcOH (37.3 grams) then $H_2O$ (69 grams) are introduced in the reactor over 30 minutes while the temperature is ramped up to 50°C. $CO_2$ is then introduced in the reactor under strong agitation (96 grams). Then a slurry consisting of MgO (28 grams) in xylene (200 grams) is introduced in the reactor and a further quantity of $CO_2$ is bubbled through the mixture. At the end of $CO_2$ introduction, distillation of the solvent is accomplished by heating to 132 °C . 500 grams of base oil is then introduced in the reactor. The mixture is then centrifuged in a lab centrifuge to remove unreacted magnesium oxide and other solid. Finally, the mixture is heated at 170°C under vacuum (15 mbar) to remove the xylene and to lead to the final product containing 4.3% Magnesium as a $C_{20}$-$C_{24}$ magnesium alkylhydroxybenzoate detergent, made from isomerized NAO with isomerization level of 0.16. Properties: TBN (mgKOH/g) = 199 in 35 wt% of diluent oil.

**Example B**

Detergent was made analogously to Example A, except the isomerization level was 0.11.

**Example C**

Detergent was made analogously to Example A, except the isomerization level was 0.27.

**Comparative Example A**

Comparative Example A is $C_{14}$-$C_{18}$ magnesium alkylhydroxybenzoate detergent, made from alpha olefin. Properties: TBN (mgKOH/g) = 236; Mg (wt.%) = 5.34.

**Comparative Example B**

Comparative Example B is a $C_{14}$-$C_{18}$ calcium alkylhydroxybenzoate detergent, available from Infineum International Ltd. under the trade designation "Infineum M7121". Properties: TBN (mgKOH/g) = 225; Ca (wt.%) = 8.0%; Mg (wt.%) = 0.24.

**Comparative Example C**

Comparative Example C is a $C_{14}$-$C_{18}$ magnesium alkylhydroxybenzoate detergent, available from Infineum International Ltd under the trade designation "Infineum C9012". Properties: TBN (mgKOH/g) = 345; Mg (wt.%) = 7.45.

**Comparative Example D**

Comparative Example D is a $C_{14}$-$C_{18}$ calcium alkylhydroxybenzoate detergent, made from normal alpha olefin.

Properties: TBN (mgKOH/g) = 175; Ca (wt.%) = 6.25%.

**Baseline 1**

A heavy duty automotive lubricating oil composition was prepared that contained a major amount of a base oil of lubricating viscosity and the following additives, to provide an SAE 15W-40 finished oil:

(1) an ethylene carbonate post-treated bis-succinimide dispersant;
(2) 990 ppm in terms of phosphorus content, of a mixture of a primary zinc dialkyldithiophosphate and a secondary zinc dialkyldithiophosphate;
(3) Moly succinimide complex providing 50 ppm of molybdenum
(4) an alkylated diphenylamine antioxidant;
(5) 5 ppm in terms of silicon content, of a foam inhibitor;
(6) 9.5 wt. % VII (additive) of Non-dispersant OCP and 0.3 wt. % PPD; and
(7) the remainder, a Group II base oil (Chevron 220R).

**Baseline 2**

A passenger car automotive lubricating oil composition was prepared that contained a major amount of a base oil of lubricating viscosity and the following additives, to provide an SAE 5W-20 finished oil:

(1) an ethylene carbonate post-treated bis-succinimide dispersant;
(2) a borated bis-succinimide dispersant;
(3) 770 ppm in terms of phosphorus content, of a mixture of a primary zinc dialkyldithiophosphate and a secondary zinc dialkyldithiophosphate;
(4) MoDTC providing 800 ppm of molybdenum;
(5) an alkylated diphenylamine antioxidant;
(6) a hindered phenol antioxidant;
(7) 5 ppm in terms of silicon content, of a foam inhibitor;
(8) 1.5 wt. % VII (additive) of Non-dispersant OCP and 0.4 wt. % PPD; and
(9) the remainder, a Group III base oil (Yubase® 4 and 6 mixture).

**Example 1**

To formulation baseline 1 was added 0.2100 wt.% in terms of magnesium content, of a magnesium alkylhydroxybenzoate detergent of Example A.

**Example 2**

To formulation of baseline 1 was added 0.2100 wt.% in terms of magnesium content, of a mixture of a magnesium alkylhydroxybenzoate detergent of Example A and a magnesium alkylhydroxybenzoate detergent of Comparative Example C.

**Comparative Example 1**

To formulation baseline 1 was added 0.2100 wt.% in terms of magnesium content, of a magnesium alkylhydroxybenzoate detergent of Comparative Example A.

**Comparative Example 2**

To formulation baseline 1 was added 0.3500 wt.% in terms of calcium content, of a calcium alkylhydroxybenzoate detergent of Comparative Example B.

**Comparative Example 3**

To formulation baseline 1 was added 0.2100 wt.% in terms of magnesium content, of a magnesium alkylhydroxybenzoate detergent of Comparative Example C.

**Comparative Example 4**

To formulation baseline 1 was added 0.3500 wt.% in terms of calcium content, of a calcium alkylhydroxybenzoate detergent of Comparative Example D.

**Comparative Example 5**

To formulation of baseline 1 was added 0.2160 wt.% in terms of magnesium content, of a mixture of a magnesium alkylhydroxybenzoate detergent of Comparative Example A and a magnesium alkylhydroxybenzoate detergent of Comparative Example C.

**Example 3**

To formulation baseline 2 was added 0.1080 wt.% in terms of magnesium content, of a magnesium alkylhydroxybenzoate detergent of Example A.

**Example 4**

To formulation baseline 1 was added 0.2100 wt.% in terms of magnesium content, of a magnesium alkylhydroxybenzoate detergent of Example B.

**Example 5**

To formulation baseline 1 was added 0.2100 wt.% in terms of magnesium content, of a magnesium alkylhydroxybenzoate detergent of Example C.

**Comparative Example 6**

To formulation baseline 2 was added 0.1080 wt.% in terms of magnesium content, of a magnesium alkylhydroxybenzoate detergent of Comparative Example A.

**Testing**

**TEOST 33C - ASTM 6335**

The TEOST 33 test was performed to assess the deposit forming tendencies of engine oils brought into contact with 500.degree. C. turbocharger components. The TEOST 33 test used herein is described in D. W. Florkowski and T. W. Selby, "The Development of a Thermo-Oxidation Engine Oil Simulation Test (TEOST), SAE Paper 932837 (1993) and Stipanovic et al., "Base Oil and Additive Effects in the Thermo-Oxidation Engine Oil Simulation Test (TEOST)," SAE Paper 962038 (1996).

The apparatus consisted of an oxidation reactor and a deposition zone made up of a hollow depositor rod axially aligned within an outer tube. The temperature of the reactor and the depositor rod were independently controlled. The lubricating oil composition under evaluation was mixed with 100 ppm of iron delivered as an iron naphthenate catalyst, then added to the reactor. The mixture was then heated to and held at 100 °C. This sample was exposed to a gas stream of air, nitrous oxide, and water. Throughout the TEOST 33 test, the oil was pumped through the annulus between the depositor rod and the outside casing while the rod was cycled through a programmed temperature profile. Except for the initial temperature ramp from room temperature to 200 °C the temperature cycle was repeated 12 times. The total test duration was for a time period of 114 minutes.

At the completion of the oxidation cycle, the oil was collected and filtered. The equipment was cleaned with solvent and that solvent was also filtered. The filter used in collecting the oil was dried and weighed to determine the filter deposits. The depositor rod was dried and weighed to determine the accumulation of deposits. The total deposit was the sum of the rod and filter deposits and reported in milligrams. Test repeatability was originally given as +/-2.3 mg with a standard deviation of 1.6 mg.

The results of these tests are set forth below in Table 2.

Table 2

| | Ex. 1 | Ex. 4 | Ex. 5 | Comp. Ex. 2 | Comp. Ex. 4 |
|---|---|---|---|---|---|
| Total Deposits | 7.1 | 7.5 | 5.7 | 22.4 | 34.4 |

**Oxidator Bx test**

A 25 g sample was weighted into a special glass oxidator cell. A catalyst was added, followed by inserting a glass stirrer. The cell was then sealed and placed in an oil bath maintained at 340 °F and connected to the oxygen supply. One liter of oxygen was fed into the cell while the stirrer agitated the oil sample. The test was run until 1 liter of oxygen was consumed by the sample and the total time, in hours, of the sample run was reported. Higher hours to 1 Liter means better oxidation performance. Results are given in Table 3 below.

Table 3

| | Ex. 1 | Ex. 2 | Comp. Ex. 1 | Comp. Ex. 2 | Comp. Ex. 3 | Comp. Ex. 4 | Comp. Ex. 5 |
|---|---|---|---|---|---|---|---|
| Hours to 1 Ltr. | 50.71 | 50.6 | 49.63 | 38.08 | 37.38 | 31.88 | 47.1 |

**Plint TE 77 High Frequency Friction Machine**

Boundary friction coefficient measurements for the Examples and Comparative Examples were obtained using a Plint TE-77 High Frequency Friction Machine (commercially available from Phoenix Tribology). A 5mL sample of test oil was placed in the apparatus for each test. The TE-77 was run at 100C and 56N of load was placed on the testing specimen. The reciprocating speed was swept from 10Hz to 1Hz, and coefficient of friction data was collected throughout the test. Results are shown in Table 4.

**Table 4**

| | | Ex. 3 | Comp. Ex. 6 |
|---|---|---|---|
| Coefficient of Friction (100 °C) | 1 Hz | 0.060 | 0.065 |
| | 2 Hz | 0.059 | 0.062 |
| | 3 Hz | 0.054 | 0.056 |
| | 4 Hz | 0.049 | 0.048 |

Coefficient of friction data collected for these oils at reciprocating speeds of 1 to 2 Hz are in a boundary friction regime.

The boundary friction regime is an important consideration in the design of low viscosity engine oils. Boundary friction occurs when the fluid film separating two surfaces becomes thinner than the height of asperities on the surfaces. The resulting surface to surface contact creates undesirable high friction and poor fuel economy in an engine. Boundary friction in an engine can occur under high loads, low engine speeds and at low oil viscosities. Because additives - not base oil - influence the coefficient of friction under boundary conditions, additives that demonstrate lower coefficients of friction under boundary conditions in the TE-77 will give superior fuel economy in a low viscosity oil in an engine.

Based on the boundary friction regime results from Example 3, it is evident that the formulation containing the alkylhydroxybenzoate derived from isomerized normal alpha olefin is superior to those not derived from isomerized normal alpha olefin.

**MTM test**

The compositions described above were tested for friction performance in a Mini-Traction Machine (MTM) bench test. The MTM is manufactured by PCS Instruments and operates with a ball (0.75 inches 8620 steel ball) loaded against a rotating disk (52100 steel). The conditions employ a load of approximately 10-30 Newtons, a speed of approximately 10-2000 mm/s and a temperature of approximately 125-150 °C. In this bench test, the boundary friction performance of a formulation under a rolling/sliding contact is measured by the low speed traction coefficient. The low speed traction coefficient is the average traction coefficient of the second ***Stribeck*** between 15 and 20mm/s. Lower low speed traction coefficients correspond to better boundary friction performance of the oil. Results are given in Table 5 below.

**Table 5**

| | Ex. 3 | Comp. Ex. 6 |
|---|---|---|
| Low Speed Traction Coefficient Traction Coefficient | 0.0483 | 0.0588 |

Discussion

Example A and formulations containing Example A of the current invention provides a range of benefits. The combination of Mg metal and $C_{20-24}$ with an isomerized normal alpha olefin provides benefits in BN retention, oxidation, and friction. This combination of attributes is very effective in improving fuel economy in more efficient engines which are designed to operate at higher temperatures.

**Claims**

**1.** A magnesium alkylhydroxybenzoate detergent wherein the alkyl group is derived from an isomerized alpha olefin having from 10 to 40 carbon atoms per molecule, and having an isomerization level (I) of the normal alpha olefin of from 0.1 to 0.4;
wherein the isomerization level (I) is determined by hydrogen-1 (1H) NMR obtained on a Bruker Ultrashield Plus 400 in chloroform-dl at 400 MHz using TopSpin 3.2 spectral processing software, wherein the isomerization level (I) is:

$$I = m/(m+n)$$

where m is NMR integral for methyl groups with chemical shifts between 0.30 ± 0.03 to 1.01 ± 0.03 ppm, and n is NMR integral for methylene groups with chemical shifts between 1.01 ± 0.03 to 1.38 ± 0.10 ppm.

**2.** The magnesium alkylhydroxybenzoate detergent of claim 1 having the following structure (Formula 1):

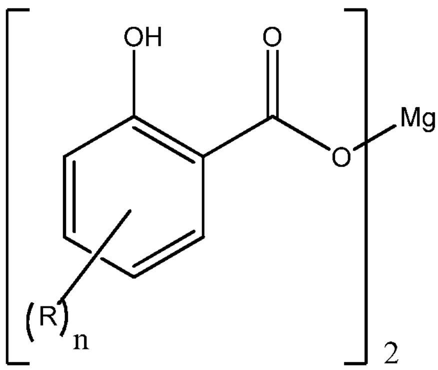

$(MgCO_3)_y\ (MgOH_2)_z$

Formula 1

where R is an alkyl group derived from an isomerized alpha olefin having from 10 to 40 carbon atoms per molecule, having an isomerization level (I) of the normal alpha olefin of from 0.1 to 0.4, n is an integer from 1 to 4, and y and z are independently integers or fractional numerical values.

**3.** The magnesium alkylhydroxybenzoate detergent of claim 1, wherein the TBN determined in accordance with ASTM D2896 is 10-450mgKOH/gm on an oil-free basis.

**4.** A lubricating oil composition comprising:

(a) a major amount of an oil of lubricating viscosity, wherein "major amount" means in excess of 50 weight % of a composition; and
(b) a magnesium alkylhydroxybenzoate detergent according to any of claims 1-3.

5. The lubricating oil composition of claim 4 further comprising a molybdenum containing compound.

6. The lubricating oil composition of claim 4, further comprising a detergent, optionally wherein the detergent is salicylate, phenate, sulfonate, or a combination thereof, or wherein the detergent is a magnesium salicylate.

7. The lubricating oil composition of claim 4, further comprising a non-dispersant olefin copolymer VII.

8. The lubricating oil composition of claim 4, further comprising a primary or secondary zinc dithiophosphate compound or a mixture thereof.

9. The lubricating oil composition of claim 4, further comprising a friction modifier, optionally. wherein the friction modifier is molybdenum dithiocarbamate.

10. A process of preparing a magnesium alkylhydroxybenzoate detergent, the process comprising:

(a) alkylating a hydroxyaromatic compound with at least one normal alpha olefin having from 10 to 40 carbon atoms per molecule that has been isomerized to obtain an isomerized alpha olefin having an isomerization level (I) of the normal alpha olefin of from 0.1 to 0.4, thereby producing an alkylated hydroxyaromatic compound;
wherein the isomerization level (I) is determined by hydrogen-1 (1H) NMR obtained on a Bruker Ultrashield Plus 400 in chloroform-dl at 400 MHz using TopSpin 3.2 spectral processing software, wherein the isomerization level (I) is:

$$I = m/(m+n)$$

where m is NMR integral for methyl groups with chemical shifts between 0.30 $\pm$ 0.03 to 1.01 $\pm$ 0.03 ppm, and n is NMR integral for methylene groups with chemical shifts between 1.01 $\pm$ 0.03 to 1.38 $\pm$ 0.10 ppm;
(b) neutralizing the resulting alkylated hydroxyaromatic compound with an alkali metal base such as KOH or NaOH to provide an alkali metal salt of the alkylated hydroxyaromatic compound;
(c) carboxylating the alkali metal salt from step (b) with $CO_2$ thereby producing an alkylated hydroxybenzoic acid alkali metal salt;
(d) acidifying the salt produced in step (c) with acid to produce the alkylated hydroxybenzoic acid;
(e) neutralizing the alkylated hydroxybenzoic acid with magnesium oxide, magnesium hydroxide, or magnesium carbonate; and
(f) optionally, overbasing the magnesium alkylhydroxybenzoate produced in step (e) with a magnesium compound such as MgO, Mg(OH)2, MgCO3 in the presence of CO2 thereby producing an overbased magnesium alkylated hydroxybenzoate.

11. The process of claim 10, wherein the TBN of the magnesium alkylhydroxybenzoate detergent determined in accordance with ASTM D2896 is 10-450 mgKOH/gm on an oil-free basis.

12. A method for improving fuel economy performance of lubricating oil in an internal combustion engine comprising, operating said internal combustion engine with a lubricating oil composition comprising:

(a) a major amount of an oil of lubricating viscosity, wherein "major amount" means in excess of 50 weight % of a composition; and
(b) a magnesium alkylhydroxybenzoate detergent wherein the alkyl group is derived from an isomerized alpha olefin having from 10 to 40 carbon atoms per molecule, and having an isomerization level (I) of the normal alpha olefin of from 0.1 to 0.4;
wherein the isomerization level (I) is determined by hydrogen-1 (1H) NMR obtained on a Bruker Ultrashield Plus 400 in chloroform-dl at 400 MHz using TopSpin 3.2 spectral processing software, wherein the isomerization level (I) is:

$$I = m/(m+n)$$

where m is NMR integral for methyl groups with chemical shifts between 0.30 $\pm$ 0.03 to 1.01 $\pm$ 0.03 ppm, and n is NMR integral for methylene groups with chemical shifts between 1.01 $\pm$ 0.03 to 1.38 $\pm$ 0.10 ppm.

**13.** Use of a magnesium alkylhydroxybenzoate detergent for improving fuel economy performance of a lubricating oil in an internal combustion engine during operation of the internal combustion engine with the lubricating oil composition, the lubricating oil composition comprising:

(a) a major amount of an oil of lubricating viscosity, wherein "major amount" means in excess of 50 weight % of a composition; and
(b) the magnesium alkylhydroxybenzoate detergent, wherein the magnesium alkylhydroxybenzoate detergent is as defined in any one of claims 1-3.

## Patentansprüche

**1.** Magnesiumalkylhydroxybenzoat-Detergens, wobei sich die Alkylgruppe von einem isomerisierten alpha-Olefin mit 10 bis 40 Kohlenstoffatomen pro Molekül und einem Isomerisierungsgrad (I) des normalen alpha-Olefins von 0,1 bis 0,4 ableitet;
wobei der Isomerisierungsgrad (I) durch Wasserstoff-1(1H)-NMR auf einem Bruker Ultrashield Plus 400 in Chloroform-dl bei 400 MHz unter Verwendung von TopSpin-3.2-Spektrenverarbeitungs-software bestimmt wird, wobei der Isomerisierungsgrad (I)

$$I = m/(m+n)$$

ist, wobei m das NMR-Integral für Methylgruppen mit chemischen Verschiebungen zwischen 0,30 ± 0,03 bis 1,01 ± 0,03 ppm ist und n das NMR-Integral für Methylengruppen mit chemischen Verschiebungen zwischen 1,01 ± 0,03 bis 1,38 ± 0,10 ppm ist.

**2.** Magnesiumalkylhydroxybenzoat-Detergens nach Anspruch 1 mit der folgenden Struktur (Formel 1):

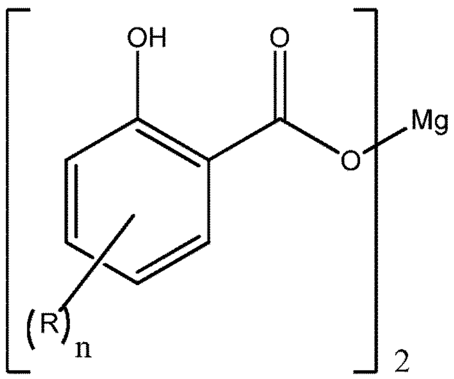

$(MgCO_3)_y (MgOH_2)_z$

Formel 1

ist, wobei R für eine Alkylgruppe steht, die sich von einem isomerisierten alpha-Olefin mit 10 bis 40 Kohlenstoffatomen pro Molekül mit einem Isomerisierungsgrad (I) des normalen alpha-Olefins von 0,1 bis 0,4 ableitet, n für eine ganze Zahl von 1 bis 4 steht und y und z unabhängig für ganze Zahlen oder gebrochene Zahlenwerte stehen.

**3.** Magnesiumalkylhydroxybenzoat-Detergens nach Anspruch 1, wobei die gemäß ASTM D2896 bestimmte TBN 10-450 mg KOH/g auf ölfreier Basis beträgt.

**4.** Schmierölzusammensetzung, umfassend:

(a) eine größere Menge eines Öls mit Schmierviskosität, wobei "größere Menge" mehr als 50 Gew.-% einer Zusammensetzung bedeutet; und
(b) ein Magnesiumalkylhydroxybenzoat-Detergens gemäß einem der Ansprüche 1-3.

**5.** Schmierölzusammensetzung nach Anspruch 4, ferner umfassend eine molybdänhaltige Verbindung.

**6.** Schmierölzusammensetzung nach Anspruch 4, ferner umfassend ein Detergens, gegebenenfalls wobei es sich bei

dem Detergens um Salicylat, Phenat, Sulfonat oder eine Kombination davon handelt oder wobei es sich bei dem Detergens um ein Magnesiumsalicylat handelt.

**7.** Schmierölzusammensetzung nach Anspruch 4, ferner umfassend ein nicht dispergierend wirkendes Olefincopolymer VII.

**8.** Schmierölzusammensetzung nach Anspruch 4, ferner umfassend eine primäre oder sekundäre Zinkdithiophosphatverbindung oder eine Mischung davon.

**9.** Schmierölzusammensetzung nach Anspruch 4, ferner umfassend einen Reibungsmodifikator, gegebenenfalls wobei es sich bei dem Reibungsmodifikator um Molybdändithiocarbamat handelt.

**10.** Verfahren zur Herstellung eines Magnesiumalkylhydroxybenzoat-Detergens, wobei das Verfahren Folgendes umfasst:

(a) Alkylieren einer hydroxyaromatischen Verbindung mit mindestens einem normalen alpha-Olefin mit 10 bis 40 Kohlenstoffatomen pro Molekül, das zu einem isomerisierten alpha-Olefin mit einem Isomerisierungsgrad (I) des normalen alpha-Olefins von 0,1 bis 0,4 isomerisiert wurde, wodurch eine alkylierte hydroxyaromatische Verbindung hergestellt wird;
wobei der Isomerisierungsgrad (I) durch Wasserstoff-1(1H)-NMR auf einem Bruker Ultrashield Plus 400 in Chloroform-dl bei 400 MHz unter Verwendung von TopSpin-3.2-Spektrenverarbeitungssoftware bestimmt wird, wobei der Isomerisierungsgrad (I)

$$I = m/(m+n)$$

ist, wobei m das NMR-Integral für Methylgruppen mit chemischen Verschiebungen zwischen 0,30 $\pm$ 0,03 bis 1,01 $\pm$ 0,03 ppm ist und n das NMR-Integral für Methylengruppen mit chemischen Verschiebungen zwischen 1,01 $\pm$ 0,03 bis 1,38 $\pm$ 0,10 ppm ist;
(b) Neutralisieren der resultierenden alkylierten hydroxyaromatischen Verbindung mit einer Alkalimetallbase wie KOH oder NaOH zur Bereitstellung eines Alkalimetallsalzes der alkylierten hydroxyaromatischen Verbindung;
(c) Carboxylieren des Alkalimetallsalzes aus Schritt (b) mit $CO_2$, wodurch ein Alkalimetallsalz einer alkylierten Hydroxybenzoesäure hergestellt wird;
(d) Ansäuern des in Schritt (c) hergestellten Salzes mit Säure zur Herstellung der alkylierten Hydroxybenzoesäure;
(e) Neutralisieren der alkylierten Hydroxybenzoesäure mit Magnesiumoxid, Magnesiumhydroxid oder Magnesiumcarbonat; und
(f) gegebenenfalls Überalkalisieren des in Schritt (e) hergestellten Magnesiumalkylhydroxybenzoats mit einer Magnesiumverbindung wie MgO, $Mg(OH)_2$, $MgCO_3$ in Gegenwart von $CO_2$, wodurch ein überalkalisiertes Magnesiumalkylhydroxybenzoat hergestellt wird.

**11.** Verfahren nach Anspruch 10, wobei die gemäß ASTM D2896 bestimmte TBN des Magnesiumalkylhydroxybenzoat-Detergens 10-450 mg KOH/g auf ölfreier Basis beträgt.

**12.** Verfahren zur Verbesserung der Kraftstoffwirtschaftlichkeitsleistung von Schmieröl in einem Verbrennungsmotor, bei dem man den Verbrennungsmotor mit einer Schmierölzusammensetzung betreibt, die Folgendes umfasst:

(a) eine größere Menge eines Öls mit Schmierviskosität, wobei "größere Menge" mehr als 50 Gew.-% einer Zusammensetzung bedeutet; und
(b) ein Magnesiumalkylhydroxybenzoat-Detergens, wobei sich die Alkylgruppe von einem isomerisierten alpha-Olefin mit 10 bis 40 Kohlenstoffatomen pro Molekül und einem Isomerisierungsgrad (I) des normalen alpha-Olefins von 0,1 bis 0,4 ableitet;
wobei der Isomerisierungsgrad (I) durch Wasserstoff-1(1H)-NMR auf einem Bruker Ultrashield Plus 400 in Chloroform-dl bei 400 MHz unter Verwendung von TopSpin-3.2-Spektrenverarbeitungssoftware bestimmt wird, wobei der Isomerisierungsgrad (I)

$$I = m/(m+n)$$

ist, wobei m das NMR-Integral für Methylgruppen mit chemischen Verschiebungen zwischen 0,30 ± 0,03 bis 1,01 ± 0,03 ppm ist und n das NMR-Integral für Methylengruppen mit chemischen Verschiebungen zwischen 1,01 ± 0,03 bis 1,38 ± 0,10 ppm ist.

**13.** Verwendung eines Magnesiumalkylhydroxybenzoat-Detergens zur Verbesserung der Kraftstoffwirtschaftlichkeitsleistung eines Schmieröls in einem Verbrennungsmotor beim Betrieb des Verbrennungsmotors mit der Schmierölzusammensetzung, wobei die Schmierölzusammensetzung Folgendes umfasst:

(a) eine größere Menge eines Öls mit Schmierviskosität, wobei "größere Menge" mehr als 50 Gew.-% einer Zusammensetzung bedeutet; und
(b) ein Magnesiumalkylhydroxybenzoat-Detergens, wobei das Magnesiumalkylhydroxybenzoat-Detergens wie in einem der Ansprüche 1-3 definiert ist.

## Revendications

**1.** Détergent de type alkylhydroxybenzoate de magnésium, le groupe alkyle étant issu d'une alphaoléfine isomérisée possédant de 10 à 40 atomes de carbone par molécule, et possédant un taux d'isomérisation (I) de l'alphaoléfine normale allant 0,1 à 0,4 ;
le taux d'isomérisation (I) étant déterminé par RMN de l'hydrogène-1 (1H) obtenue sur un Bruker Ultrashield Plus 400 dans le chloroforme-dl à 400 MHz en utilisant un logiciel de traitement spectral TopSpin 3.2, le taux d'isomérisation (I) étant :

$$I = m/(m + n)$$

où m est l'intégrale de RMN pour les groupes méthyle dotés de déplacements chimiques compris entre 0,30 ± 0,03 et 1,01 ± 0,03 ppm, et n est l'intégrale de RMN pour les groupes méthylène dotés de déplacements chimiques compris entre 1,01 ± 0,03 et 1,38 ± 0,10 ppm.

**2.** Détergent de type alkylhydroxybenzoate de magnésium selon la revendication 1 possédant la structure suivante (formule 1) :

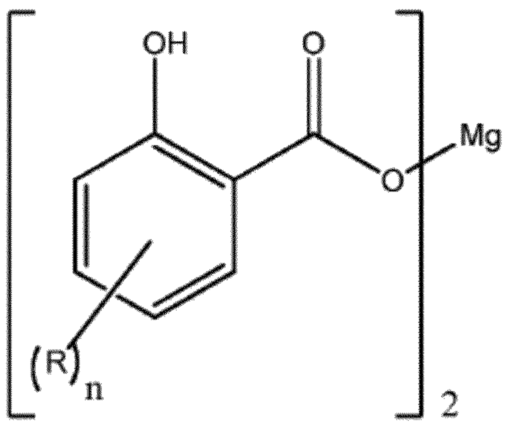

$(MgCO_3)_y (MgOH_2)_z$:

formule 1

où R est un groupe alkyle issu d'une alphaoléfine isomérisée possédant de 10 à 40 atomes de carbone par molécule, possédant un taux d'isomérisation (I) de l'alphaoléfine normale allant 0,1 à 0,4, n est un entier de 1 à 4, et y et z sont indépendamment des entiers ou des valeurs numériques fractionnelles.

**3.** Détergent de type alkylhydroxybenzoate de magnésium selon la revendication 1, le TBN déterminé conformément

à la norme ASTM D2896 étant de 10 à 450 mg de KOH/g sur une base sans huile.

**4.** Composition d'huile lubrifiante comprenant :

(a) une quantité majoritaire d'une huile de viscosité lubrifiante, les termes « quantité majoritaire » signifiant plus de 50 % en poids d'une composition ; et
(b) un détergent de type alkylhydroxybenzoate de magnésium selon l'une quelconque des revendications 1 à 3.

**5.** Composition d'huile lubrifiante selon la revendication 4, comprenant en outre un composé contenant du molybdène.

**6.** Composition d'huile lubrifiante selon la revendication 4, comprenant en outre un détergent, éventuellement le détergent étant un salicylate, un phénate, un sulfonate ou une combinaison correspondante, ou le détergent étant un salicylate de magnésium.

**7.** Composition d'huile lubrifiante selon la revendication 4, comprenant en outre un copolymère VII d'oléfines non dispersant.

**8.** Composition d'huile lubrifiante selon la revendication 4, comprenant en outre un composé de type dithiophosphate de zinc primaire ou secondaire ou un mélange correspondant.

**9.** Composition d'huile lubrifiante selon la revendication 4, comprenant en outre un modificateur de friction, éventuellement, le modificateur de friction étant un dithiocarbamate de molybdène.

**10.** Procédé de préparation d'un détergent de type alkylhydroxybenzoate de magnésium, le procédé comprenant :

(a) l'alkylation d'un composé hydroxyaromatique avec au moins une alphaoléfine normale possédant de 10 à 40 atomes de carbone qui a été isomérisée pour obtenir une alphaoléfine isomérisée possédant un taux d'isomérisation (I) de l'alphaoléfine normale allant 0,1 à 0,4, produisant ainsi un composé hydroxyaromatique alkylé ; le taux d'isomérisation (I) étant déterminé par RMN de l'hydrogène-1 (1H) obtenue sur un Bruker Ultrashield Plus 400 dans le chloroforme-dl à 400 MHz en utilisant un logiciel de traitement spectral TopSpin 3.2, le taux d'isomérisation (I) étant :

$$I = m/(m + n)$$

où m est l'intégrale de RMN pour les groupes méthyle dotés de déplacements chimiques compris entre 0,30 $\pm$ 0,03 et 1,01 $\pm$ 0,03 ppm, et n est l'intégrale de RMN pour les groupes méthylène dotés de déplacements chimiques compris entre 1,01 $\pm$ 0,03 et 1,38 $\pm$ 0,10 ppm ;
(b) neutralisation du composé hydroxyaromatique alkylé résultant avec une base de métal alcalin telle que KOH ou NAOH pour fournir un sel de métal alcalin du composé hydroxyaromatique alkylé ;
(c) carboxylation du sel de métal alcalin de l'étape (b) avec du $CO_2$ produisant ainsi un sel de métal alcalin d'acide hydroxybenzoïque alkylé ;
(d) acidification du sel produit dans l'étape (c) avec un acide pour produire l'acide hydroxybenzoïque alkylé ;
(e) neutralisation de l'acide hydroxybenzoïque alkylé avec de l'oxyde de magnésium, de l'hydroxyde de magnésium ou du carbonate de magnésium ; et
(f) éventuellement, surbasage de l'alkylhydroxybenzoate de magnésium produit dans l'étape (e) avec un composé du magnésium tel que MgO, $Mg(OH)_2$, $MgCO_3$ en la présence de $CO_2$ produisant ainsi un hydroxybenzoate alkylé de magnésium.

**11.** Procédé selon la revendication 10, le TBN du détergent de type alkylhydroxybenzoate de magnésium déterminé conformément à la norme ASTM D2896 étant de 10 à 450 mg de KOH/g sur une base sans huile.

**12.** Procédé d'amélioration de la performance économique de carburant d'une huile lubrifiante dans un moteur à combustion interne, en faisant fonctionner ledit moteur à combustion interne avec une composition d'huile lubrifiante comprenant :

(a) une quantité majoritaire d'une huile de viscosité lubrifiante, les termes « quantité majoritaire » signifiant plus de 50 % en poids d'une composition ; et

(b) un détergent de type alkylhydroxybenzoate de magnésium, le groupe alkyle étant issu d'une alphaoléfine isomérisée possédant de 10 à 40 atomes de carbone par molécule, et possédant un taux d'isomérisation (I) de l'alphaoléfine normale allant 0,1 à 0,4 ;
le taux d'isomérisation (I) étant déterminé par RMN de l'hydrogène-1 (1H) obtenue sur un Bruker Ultrashield Plus 400 dans le chloroforme-dl à 400 MHz en utilisant un logiciel de traitement spectral TopSpin 3.2, le taux d'isomérisation (I) étant :

$$I = m/(m + n)$$

où m est l'intégrale de RMN pour les groupes méthyle dotés de déplacements chimiques compris entre 0,30 $\pm$ 0,03 et 1,01 $\pm$ 0,03 ppm, et n est l'intégrale de RMN pour les groupes méthylène dotés de déplacements chimiques compris entre 1,01 $\pm$ 0,03 et 1,38 $\pm$ 0,10 ppm.

**13.** Utilisation d'un détergent de type alkylhydroxybenzoate de magnésium pour l'amélioration de la performance économique de carburant d'une huile lubrifiante dans un moteur à combustion interne pendant le fonctionnement du moteur à combustion interne avec la composition d'huile lubrifiante, la composition d'huile lubrifiante comprenant :

(a) une quantité majoritaire d'une huile de viscosité lubrifiante, les termes « quantité majoritaire » signifiant plus de 50 % en poids d'une composition ; et
(b) le détergent de type alkylhydroxybenzoate de magnésium, le détergent de type alkylhydroxybenzoate de magnésium étant tel que défini dans l'une quelconque des revendications 1 à 3.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 62527152
- US 2011003726 A1
- US 4647387 A
- US 8076275 B
- US 3172892 A
- US 3219666 A
- US 3272746 A
- US 2680096 A
- US 3178368 A
- US 3801507 A
- US 8580717 A

### Non-patent literature cited in the description

- **D. W. FLORKOWSKI ; T. W. SELBY.** *The Development of a Thermo-Oxidation Engine Oil Simulation Test (TEOST),* 1993
- **STIPANOVIC et al.** *Base Oil and Additive Effects in the Thermo-Oxidation Engine Oil Simulation Test (TEOST),* 1996